# EUROPEAN PATENT APPLICATION

(11) **EP 4 138 281 A1**
(43) Date of publication of application: **22.02.2023**
(21) Application number: 21853225.7
(22) Date of filing: 05.08.2021
(51) Int. Cl.: H02K 15/02, C21D 1/34, C21D 7/06, C21D 9/00

(54) **MANUFACTURING METHOD OF ROTOR FOR ROTATING ELECTRIC MACHINE, AND MANUFACTURING METHOD OF ROTATING ELECTRIC MACHINE**

(30) Priority: 07.08.2020 JP 2020135057
(71) Applicant: AISIN CORPORATION, Kariya-shi, Aichi 448-8650 (JP)
(72) Inventor: MATSUZAKA, Keisuke, Kariya-shi, Aichi 448-8650 (JP); KASAI, Daisuke, Kariya-shi, Aichi 448-8650 (JP); OKADA, Kazuaki, Kariya-shi, Aichi 448-8650 (JP)
(74) Representative: Kramer Barske Schmidtchen Patentanwälte PartG mbB
(86) International application number: PCT/JP2021/029127
(87) International publication number: WO 2022/030584

(57) **Abstract**

Disclosed is a method for manufacturing a rotor (30) for a rotary electric machine (1) having magnet holes (321, 322). The method includes a step of preparing a plurality of steel sheets punched out of a material by pressing, a step of stacking the plurality of steel sheets to form a rotor core, a step of causing plastic strain by applying mechanical energy or high-density energy to at least one steel sheet out of the plurality of steel sheets, and a step of applying heat to the steel sheet in which the plastic strain has been caused.

## Description

### TECHNICAL FIELD

The present disclosure relates to a method for manufacturing a rotor for a rotary electric machine and a method for manufacturing a rotary electric machine.

### BACKGROUND ART

In rotary electric machines such as IPM (Interior Permanent Magnet) motors, it is effective, in terms of increase in a motor torque, to reduce the occurrence of a case where magnetic fluxes from N and S poles of magnets of a rotor are coupled together through electromagnetic steel sheets in the rotor. Therefore, there has hitherto been adopted a method for maximally thinning a bridge portion around a magnet hole into which a magnet is inserted, thereby suppressing passage of magnetic fluxes through the bridge portion. Due to, for example, a demand for downsizing and higher-speed rotation of rotary electric machines, electromagnetic steel sheets having higher strength in addition to electromagnetic characteristics such as low iron loss are required as a material for rotors.

Under such circumstances, there is known a technology for increasing local strength at a location such as the bridge portion by generating an eddy current in a rotor core by an alternating magnetic field after the rotor core has been assembled to apply a heat treatment effect only to a local part of a rotor core (for example, Patent Document 1).

### Related Art Documents

### Patent Documents

Patent Document 1: Japanese Unexamined Patent Application Publication No. 2016-194127 (JP 2016-194127 A)

### SUMMARY OF THE INVENTION

### Problem to be Solved by the Invention

In the related art described above, the local strength at the location such as the bridge portion can be increased to some extent by applying the heat treatment effect only to the local part of the rotor core. However, there is insufficiency in achieving finer grains of steel sheets, which may still lead to the lack of strength. If the grains in a sheet are fine, the sheet before punching is hard (that is, the strength of the sheet itself is high), which leads to inconveniences such as an increase in the size of pressing equipment and a decrease in the life of a die.

Therefore, in one aspect, the present disclosure has an object to achieve downsizing of the pressing equipment, an increase in the life of the die, and an increase in the strength of the rotor for the rotary electric machine.

### Means for Solving the Problem

One aspect of the present disclosure provides a method for manufacturing a rotor for a rotary electric machine having a magnet hole. The method includes: a step of preparing a plurality of steel sheets punched out of a material by pressing; a stacking step for stacking the plurality of steel sheets to form a rotor core; a step of causing plastic strain before or after the stacking step by applying mechanical energy or high-density energy to at least one steel sheet out of the plurality of steel sheets; and a step of applying heat to the steel sheet in which the plastic strain has been caused.

### Effects of the Invention

According to the present disclosure, it is possible to achieve the downsizing of the pressing equipment, the increase in the life of the die, and the increase in the strength of the rotor for the rotary electric machine.

### BRIEF DESCRIPTION OF THE DRAWINGS

[FIG. 1] FIG. 1 is a cross-sectional view schematically showing a cross-sectional structure of a motor according to an embodiment.
[FIG. 2] FIG. 2 is a cross-sectional view of a rotor (cross-sectional view taken along a plane perpendicular to an axial direction).
[FIG. 3] FIG. 3 is an enlarged cross-sectional view of a part of the rotor according to the present embodiment.
[FIG. 4] FIG. 4 is an enlarged cross-sectional view of a part of a rotor according to a first modification.
[FIG. 5] FIG. 5 is an enlarged cross-sectional view of a part of a rotor according to a second modification.
[FIG. 6] FIG. 6 is a schematic flowchart showing the flow of a method for manufacturing the rotor.
[FIG. 7] FIG. 7 is an explanatory diagram of a manufacturing process shown in FIG. 6, and is a diagram schematically showing each state in the manufacturing process.
[FIG. 8] FIG. 8 is an explanatory diagram of an example of a method for applying mechanical energy or high-density energy.
[FIG. 9] FIG. 9 is an explanatory diagram of heating conditions for a heating step.
[FIG. 10] FIG. 10 is an explanatory diagram of a manufacturing process according to Comparative Example 1, and is a diagram schematically showing each state in the manufacturing process.
[FIG. 11] FIG. 11 is an explanatory diagram of a manufacturing process according to Comparative Example 2, and is a diagram schematically showing each state in the manufacturing process.

### MODES FOR CARRYING OUT THE INVENTION

Embodiments will be described in detail below with reference to the accompanying drawings.

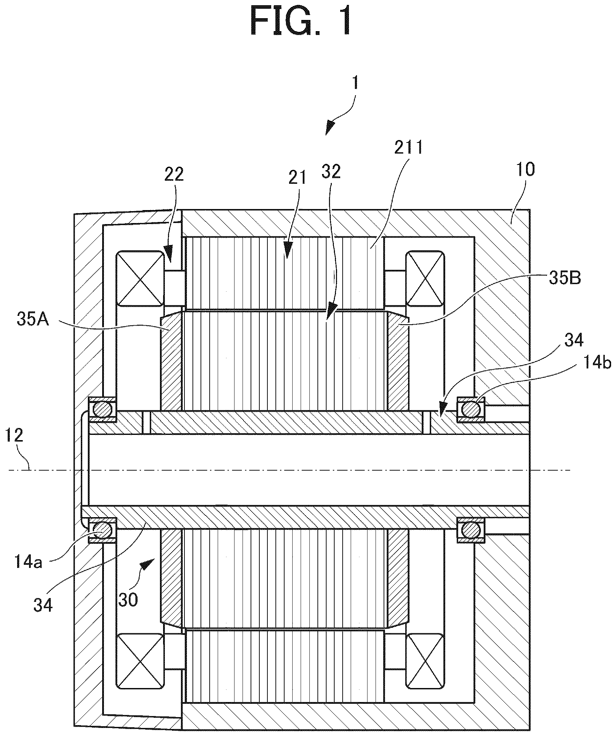

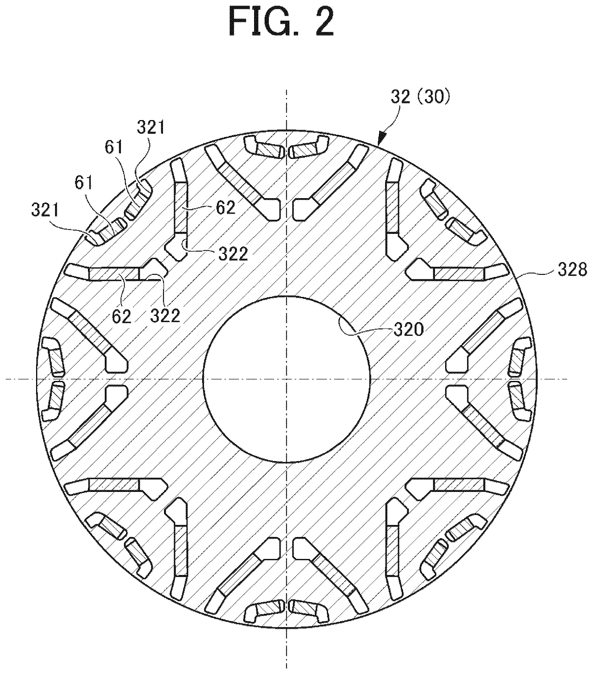

FIG. 1 is a cross-sectional view schematically showing a cross-sectional structure of a motor 1 (an example of a rotary electric machine) according to an embodiment. FIG. 2 is a cross-sectional view of a rotor 30 (cross-sectional view taken along a plane perpendicular to an axial direction). In FIG. 2 and the like, for making the figures easy to see, reference signs may be given only to part of a plurality of sections having the same attributes.

FIG. 1 shows a rotation axis 12 of the motor 1. In the following description, the axial direction refers to a direction in which the rotation axis (rotation center) 12 of the motor 1 extends, and a radial direction refers to a radial direction centered on the rotation axis 12. Therefore, an outer side in the radial direction refers to a side away from the rotation axis 12, and an inner side in the radial direction refers to a side toward the rotation axis 12. A circumferential direction corresponds to a rotation direction around the rotation axis 12.

The motor 1 may be a vehicle driving motor used in, for example, a hybrid vehicle or an electric vehicle. However, the motor 1 may be used for any other purpose.

The motor 1 is of an inner rotor type, and a stator 21 is provided so as to surround the outer side of the rotor 30 in the radial direction. The outer side of the stator 21 in the radial direction is fixed to a motor housing 10. The stator 21 includes a stator core 211 composed of stacked steel sheets made of a magnetic body and having an annular shape, for example, and a plurality of slots (not shown) on which a coil 22 is wound is provided on the inner side of the stator core 211 in the radial direction.

The rotor 30 is disposed on the inner side of the stator 21 in the radial direction.

The rotor 30 includes a rotor core 32, a rotor shaft 34, end plates 35A and 35B, and permanent magnets 61 and 62.

The rotor core 32 is fixed to the surface of the rotor shaft 34 on the outer side in the radial direction, and rotates together with the rotor shaft 34. The rotor core 32 has a shaft hole 320 (see FIG. 2), and the rotor shaft 34 is fitted in the shaft hole 320. The rotor core 32 may be fixed to the rotor shaft 34 by shrink fitting, press fitting, or the like. For example, the rotor core 32 may be coupled to the rotor shaft 34 by key coupling or spline coupling. The rotor shaft 34 is rotatably supported by the motor housing 10 via bearings 14a and 14b. The rotor shaft 34 defines the rotation axis 12 of the motor 1.

The rotor core 32 is composed of, for example, stacked steel sheets made of a magnetic body and having an annular shape. The permanent magnets 61 and 62 (see FIG. 2) are embedded in the rotor core 32. That is, the rotor core 32 has magnet holes 321 and 322 (see FIG. 2) passing through the rotor core 32 in the axial direction, and the permanent magnets 61 and 62 are inserted and fixed in the magnet holes 321 and 322. In a modification, the rotor core 32 may be made of a green compact obtained by compressing and solidifying magnetic powder.

As shown in FIG. 2, the rotor core 32 has a rotationally symmetric form centered on the rotation axis 12 when viewed in the axial direction. In the example shown in FIG. 2, the rotor core 32 has a form in which the permanent magnets 61 and 62 of respective sets overlap each time the rotor core 32 rotates by 45 degrees around the rotation axis 12.

The plurality of permanent magnets 61 and 62 may be made of neodymium or the like. In the present embodiment, for example, as shown in FIG. 2, the plurality of permanent magnets 61 and 62 is two types of permanent magnets 61 and 62 arranged such that each pair of permanent magnets 61 and each pair of permanent magnets 62 form a substantial V-shape (substantial V-shape with its outer side in the radial direction open) when viewed in the axial direction. In this case, a common magnetic pole is formed between the two permanent magnets 61 in a pair and between the two permanent magnets 62 in a pair. The plurality of permanent magnets 61 and 62 is arranged in such a manner that S poles and N poles appear alternately in the circumferential direction. In the present embodiment, the number of magnetic poles is eight, but the number of magnetic poles may be set as appropriate.

Although FIG. 1 shows the motor 1 having a specific structure, the structure of the motor 1 is not limited to such a specific structure. For example, in FIG. 1, the rotor shaft 34 is hollow, but may be solid. Further, in FIG. 1, the end plates 35A and 35B have substantially the same outer diameter as the outer diameter of the rotor core 32 and have substantially the same inner diameter as the inner diameter of the rotor core 32, but are not limited thereto. For example, the end plates 35A and 35B may have an outer diameter significantly smaller than the outer diameter of the rotor core 32.

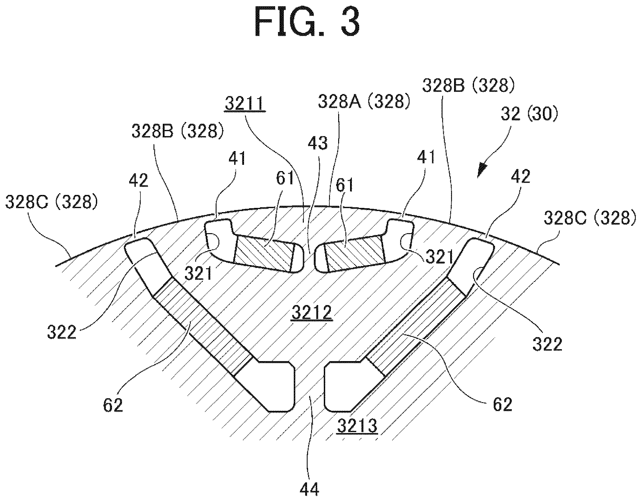

Next, the rotor core 32 and the permanent magnets 61 and 62 will further be described with reference to FIG. 3 and the subsequent figures. Hereinafter, the configuration related to one magnetic pole will be described, and the same may apply to the configurations related to the other magnetic poles.

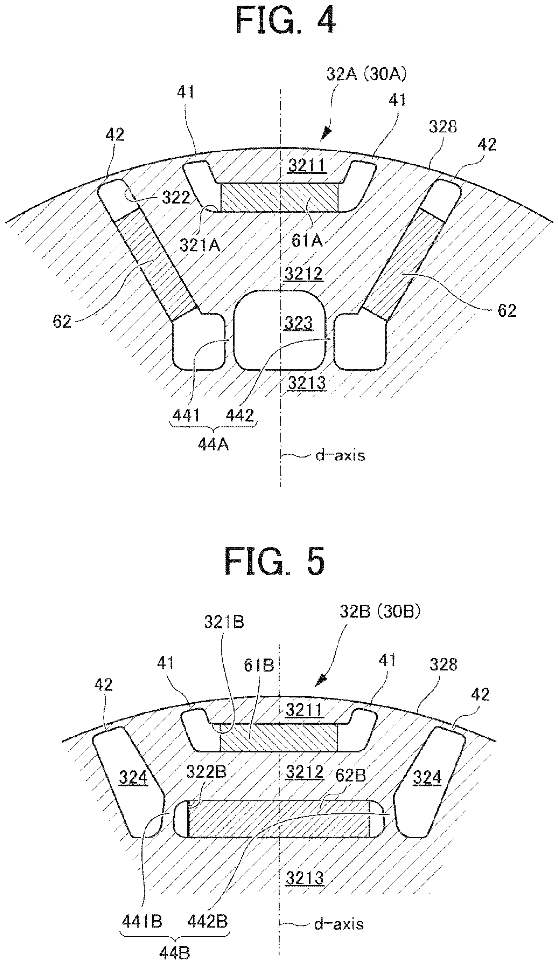

FIG. 3 is an enlarged view of a portion related to one magnetic pole shown in FIG. 2. The configuration related to one magnetic pole is basically symmetrical with respect to a d-axis (see FIG. 4; expressed as "d-axis" in English in FIG. 4). In the following, the outer side in the circumferential direction refers to a side away from the d-axis.

The rotor core 32 has the magnet holes 321 on the outer side in the radial direction (hereinafter referred to as "first magnet holes 321") and the magnet holes 322 on the inner side in the radial direction (hereinafter referred to as "second magnet holes 322").

The first magnet holes 321 are provided such that two first magnet holes 321 in a pair form a substantial V-shape (substantial V-shape with its outer side in the radial direction open). In a modification, two first magnet holes 321 in a pair may be formed in a straight line, or a single first magnet hole 321 may be formed in a straight line (a straight line perpendicular to the d-axis). The permanent magnet 61 is provided in each first magnet hole 321. A gap may be provided between the first magnet hole 321 and the permanent magnet 61 at both ends of the permanent magnet 61 in its longitudinal direction. The gap may be hollow or may be filled with resin or the like.

The second magnet holes 322 are provided on the inner side in the radial direction with respect to the first magnet holes 321. The second magnet holes 322 are provided such that two second magnet holes 322 in a pair form a substantial V-shape (substantial V-shape with its outer side in the radial direction open). The pair of second magnet holes 322 extends over a wider range in the circumferential direction than the pair of first magnet holes 321. The permanent magnet 62 is provided in each second magnet hole 322. A gap may be provided between the second magnet hole 322 and the permanent magnet 62 at both ends of the permanent magnet 62 in its longitudinal direction. The gap may be hollow or may be filled with resin or the like.

With the first magnet holes 321 and the second magnet holes 322, the rotor core 32 has three sections 3211, 3212, and 3213 that are connected in the radial direction only via bridge portions (hereinafter also referred to as "first section 3211", "second section 3212", and "third section 3213").

Specifically, the first section 3211 extends on the outer side in the radial direction with respect to the first magnet holes 321. The first section 3211 forms a part 328A of an outer peripheral surface 328 of the rotor core 32.

The second section 3212 extends between the second magnet holes 322 and the first magnet holes 321 and has opposite ends in the circumferential direction that extend to the outer peripheral surface 328 of the rotor core 32. The second section 3212 forms parts 328B of the outer peripheral surface 328 of the rotor core 32 (hereinafter also referred to as "outer peripheral surface portions 328B of the second section 3212") on both sides of the first section 3211 in the circumferential direction. The second section 3212 forms a magnetic path of a q-axis magnetic flux. Specifically, the q-axis magnetic flux flows between the second magnet holes 322 and the first magnet holes 321 from one end (outer peripheral surface portion 328B on one side) to the other end (outer peripheral surface portion 328B on the other side) of the second section 3212.

The third section 3213 extends on the inner side in the radial direction with respect to the second magnet holes 322 and has opposite ends in the circumferential direction that extend to the outer peripheral surface 328 of the rotor core 32. The third section 3213 forms parts 328C of the outer peripheral surface 328 of the rotor core 32 on both sides of the second section 3212 in the circumferential direction.

With the three sections 3211, 3212, and 3213, the rotor core 32 has a plurality of bridge portions 41, 42, 43, and 44 connecting the three sections 3211, 3212, and 3213.

The bridge portions 41 (hereinafter referred to as "first bridge portions 41") support the first section 3211 on the outer side in the radial direction with respect to the second section 3212. The first bridge portions 41 in a pair are provided on the opposite sides of the first section 3211 in the circumferential direction (on the outer side in the circumferential direction). The first bridge portions 41 extend between the outer peripheral surface 328 of the rotor core 32 and the first magnet holes 321.

The bridge portions 42 (hereinafter referred to as "second bridge portions 42") support the second section 3212 on the outer side in the radial direction with respect to the third section 3213. The second bridge portions 42 in a pair are provided on the opposite sides of the second section 3212 in the circumferential direction (on the outer side in the circumferential direction). The second bridge portions 42 extend between the outer peripheral surface 328 of the rotor core 32 and the second magnet holes 322.

The bridge portion 43 (hereinafter referred to as "first center bridge portion 43") supports the first section 3211 on the d-axis with respect to the second section 3212.

The bridge portion 44 (hereinafter referred to as "second center bridge portion 44") supports the second section 3212 on the d-axis with respect to the third section 3213.

The configuration related to the permanent magnets 61 and 62 of the rotor core 32 is optional and is not limited to the configuration shown in FIGS. 2 and 3. For example, as in a rotor 30A (rotor core 32A) of a first modification shown in FIG. 4, the two first magnet holes 321 may be replaced with a single first magnet hole 321A and an axial through hole 323 may be provided. As in a rotor 30B (rotor core 32B) of a second modification shown in FIG. 5, the two first magnet holes 321 may be replaced with a single first magnet hole 321B, the two second magnet holes 322 may be replaced with a single second magnet hole 322B, and holes 324 may be provided. In this case, the rotor core 32B does not include the first center bridge portion 43 because the two first magnet holes 321 are replaced with the single first magnet hole 321B.

Although the permanent magnets 61 are provided in the example shown in FIGS. 2 and 3, the permanent magnets 61 may be omitted. In this case, the first section 3211 and the second section 3212 are integrated and the first bridge portions 41 do not substantially exist.

Next, a method for manufacturing the rotor core 32 described above (the same applies to the rotor cores 32A and 32B) will be described in detail.

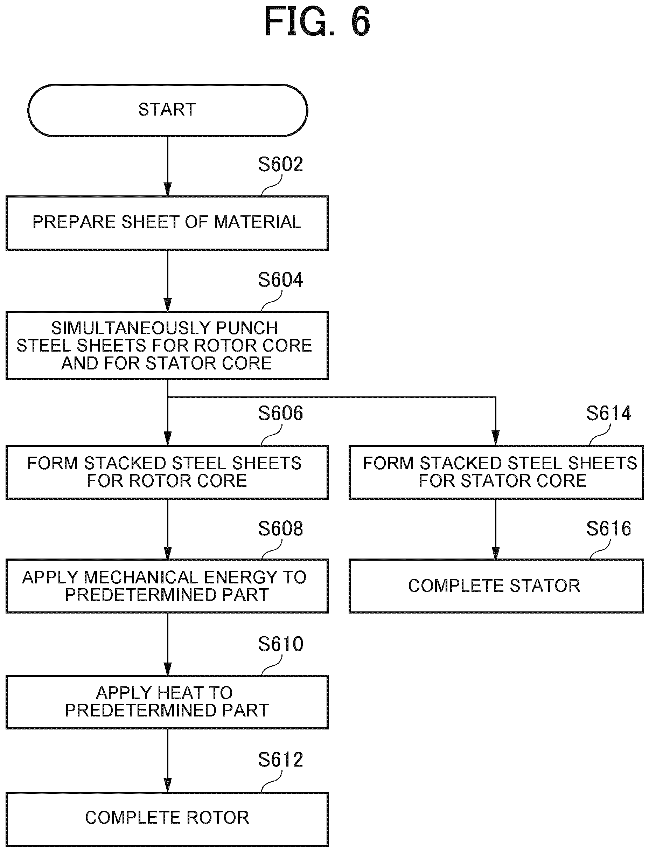

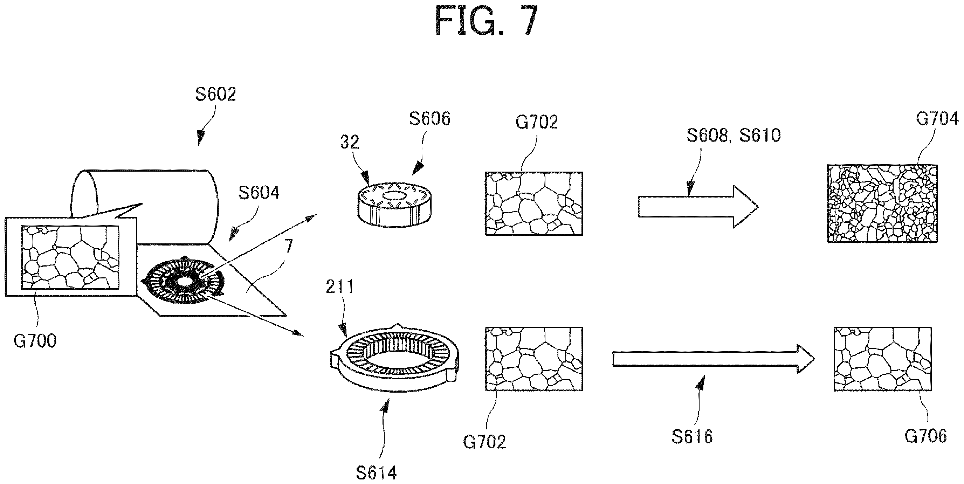

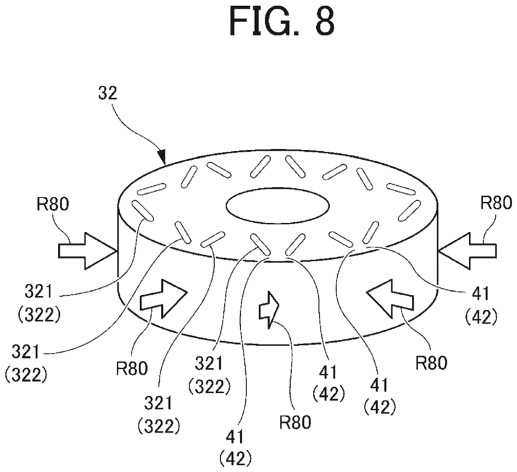

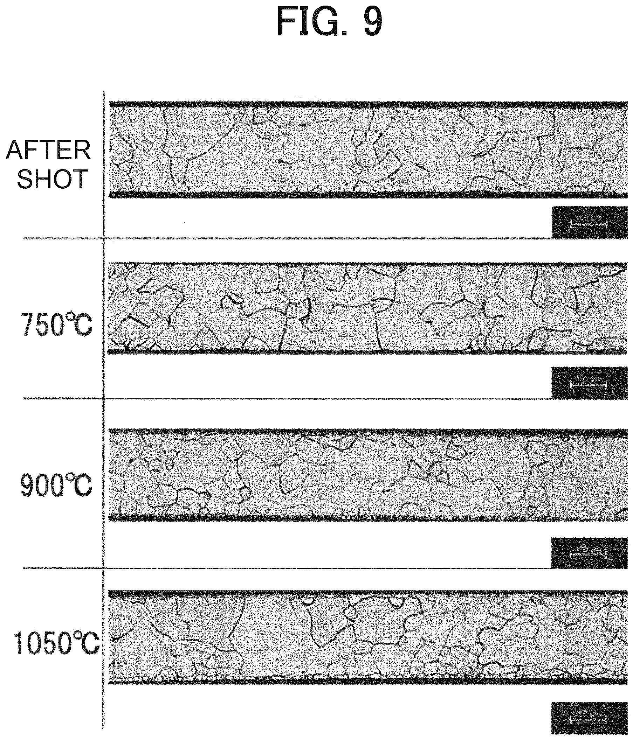

FIG. 6 is a schematic flowchart showing the flow of a method for manufacturing the motor 1. FIG. 6 schematically shows a part related to a method for manufacturing the rotor 30 and a part related to a method for manufacturing the stator 21 in the flow of the method for manufacturing the motor 1. FIG. 7 is an explanatory diagram of a manufacturing process shown in FIG. 6, and is a diagram schematically showing each state in the manufacturing process. FIG. 7 also shows images G700 to G706 about grain sizes in association with the respective states. FIG. 9 is an explanatory diagram of heating conditions for a heating step, and is a diagram showing a cross section of the grains. FIG. 9 shows photographs of observed states of the cross section heated at respective temperatures. FIG. 8 is an explanatory diagram of an example of a method for applying mechanical energy or high-density energy. Since FIG. 8 (as well as FIG. 7) is the explanatory diagram related to the manufacturing method, FIG. 8 shows either of the magnet holes 321 and 322 (along with it, either of the bridge portions 41 and 42 on the outer peripheral side).

In Step S602, a sheet 7 of a material is first prepared. As schematically shown in FIG. 7, the sheet 7 of the material may be a sheet-shaped material wound in a roll. For example, the sheet 7 has a ferrite polycrystalline metallographic structure. The average grain size of the grains in the sheet 7 is relatively large (see the image G700 in FIG. 7), and is preferably 70 µm to 90 µm, for example, about 80 µm. The grains are ferrite grains and have a misorientation of 5° or more.

In Step S604, a steel sheet for the rotor core 32 (an example of a first steel sheet) and a steel sheet for the stator core 211 (an example of a second steel sheet) are simultaneously punched out of the sheet 7 by punching with pressing equipment. That is, the steel sheet for the rotor core 32 and the steel sheet for the stator core 211 are simultaneously punched out of the same sheet 7. Thus, the yield can be increased compared to a case where only one of the steel sheet for the rotor core 32 and the steel sheet for the stator core 211 is punched out. In general, a plurality of sets of the steel sheet for the rotor core 32 and the steel sheet for the stator core 211 can be punched out of one continuous sheet 7. The steel sheet for the rotor core 32 and the steel sheet for the stator core 211 may be formed by punching different continuous sheets 7 (an example of a first sheet and an example of a second sheet), respectively. In this case, the different continuous sheets 7 have the same material and the same characteristics (average grain size of grains, etc.). In this case, a press die for punching the steel sheet for the rotor core 32 and a press die for punching the steel sheet for the stator core 211 can be structured separately. Thus, it is possible to realize die structures depending on the forms of the steel sheet for the rotor core 32 and the steel sheet for the stator core 211. Further, electromagnetic steel sheets can efficiently be punched out by separately using the press die for punching the steel sheet for the rotor core 32 and the press die for punching the steel sheet for the stator core 211.

As described above, the average grain size of the grains in the sheet 7 is relatively large. Accordingly, it is possible to reduce inconveniences that may be caused in a case where the average grain size of the grains in the sheet is relatively small (for example, about 20 µm). That is, it is possible to reduce such inconveniences that a load during punching increases due to high strength of the sheet itself, leading to an increase in the size of the pressing equipment and a decrease in the life of the die.

In Step S606, stacked steel sheets for the rotor core 32 are formed by stacking a plurality of steel sheets for the rotor core 32. In the state of the stacked steel sheets for the rotor core 32, the average grain size of the grains is substantially equal to the average grain size of the grains in the sheet 7 (see the image G702 in FIG. 7). The term "substantially equal" about the average grain size or the like is a concept that allows a relatively small variance (for example, a variance within 10%) such as a variance caused by individual differences.

In Step S608, mechanical energy or high-density energy (thermal energy) is applied to some predetermined parts of the stacked steel sheets for the rotor core 32. The predetermined part is a part where increase in the strength is effective, and is determined in advance at a design phase or the like. The predetermined part preferably includes the bridge portions 41 to 44 in the state of the rotor core 32. This is because, as described above, the bridge portions 41 to 44 are relatively narrow and stress concentration is likely to occur. For example, the predetermined part may be a part of the bridge portions 41 to 44, such as a part of the first bridge portion 41, or may include all of the bridge portions 41 to 44.

The mechanical energy or the high-density energy is energy at a level at which plastic strain is caused in the predetermined part. For example, the mechanical energy can be realized by shot blasting, shot peening, laser peening, or rolling. By causing the plastic strain in the predetermined part, the density of the grains at the predetermined part can be increased in the heating step that is Step S610 described later.

In the state of the stacked steel sheets for the rotor core 32, the predetermined part may include only the bridge portions 41 and 42 on the outer peripheral side among the bridge portions 41 to 44. This is because it is difficult to apply the mechanical energy or the high-density energy to the internal bridge portions 43 and 44 in the state of the stacked steel sheets for the rotor core 32. In this case, the mechanical energy or the high-density energy may be applied from the outer peripheral side of the rotor core 32 as schematically indicated by an arrow R80 in FIG. 8. In a modification, the mechanical energy or the high-density energy may be applied in the state of the steel sheet for the rotor core 32 (that is, the state before stacking).

In Step S610, heat is applied to the predetermined part of the stacked steel sheets for the rotor core 32 (heating step). The heating step is a step for obtaining finer grains at the predetermined part by recrystallization. Therefore, the heating conditions such as a temperature and a heating time are adapted so that the grains at the predetermined part become finer in a desired fashion by recrystallization. The heating of the predetermined part may be realized by radiating high-density energy as in heating by laser radiation. Alternatively, furnace heating, high-frequency heating, or the like may be used. Since the plastic strain has been caused in the grains at the predetermined part in Step S608 described above, the diameters are easily reduced (and the density is increased accordingly) by recrystallization during the heat treatment in Step S610.

In the present embodiment, the heating step is realized in the state of the stacked steel sheets for the rotor core 32, but may be realized in the state of the steel sheet for the rotor core 32 (that is, the state before stacking). Further, the heating step may be realized in the state of the stacked steel sheets for the rotor core 32, while the mechanical energy or the high-density energy described above is applied in the state of the steel sheet for the rotor core 32 (that is, the state before stacking).

When such a heating step is executed, the grain size of the grains at the predetermined part of the stacked steel sheets for the rotor core 32 is smaller than the grain size of the grains at the other parts. That is, the average grain size of the grains at the predetermined part is significantly smaller than the average grain size of the grains in the sheet 7 (see the image G704 in FIG. 7). For example, the average grain size of the grains at the predetermined part is 10 µm to 30 µm, and may be, for example, about 20 µm. For example, if the average grain size of the grains in the sheet 7 is 80 µm and the average grain size of the grains at the predetermined part is 20 µm, the strength of the predetermined part (bridge portions 41 and 42) increases by about 15% compared to the other parts.

For example, FIG. 9 shows, in the order from the top, a state of the cross section after the shot blasting has been performed as Step S608 (expressed as "After Shot"), a state of the cross section when the temperature of the subsequent heating step is 750°C, a state of the cross section when the temperature of the subsequent heating step is 900°C, and a state of the cross section when the temperature of the subsequent heating step is 1050°C. Further details of the conditions are as follows.

### [Shot blasting conditions]

Blast material: FHB #400 (glass)
Blast material grain size: 38 to 53 µm
Blast pressure: 0.3 to 0.35 MPa
Blast time: 10 seconds
Blast distance: 200 mm

### [Laser heating conditions]

Heating temperature: 750°C to 900°C
Heating time: 0.3 to 1.0 seconds
Heating power: 450 to 4000 W
Atmosphere: air
Cooling: self-cooling

In this case, as shown in FIG. 9, the shot blasting is performed on stacked steel sheets in which the average grain size of grains at the predetermined part is about 60 µm, and then the heating step at a heating temperature of 900°C is performed on the predetermined part. Then, the average grain size at the predetermined part (the region where plastic strain has been caused by the shot blasting) is 4 to 10 µm, and finer grains are observed. When the heating step is performed at a heating temperature of 750°C, no finer grains are observed. When the heating step is performed at a heating temperature of 1050°C, finer grains are observed as in the case of the heating step at the heating temperature of 900°C, and ferrite grains having an average grain size of 10 to 30 µm and coarser than the grains having the average grain size of 4 to 10 µm in the case of the heating step at the heating temperature of 900°C are observed as well. Thus, this case demonstrates that the heating step at the heating temperature of 900°C is most suitable. In the case of the heating step at the heating temperature of 1050°C, the coarse ferrite grains having the average grain size of 10 to 30 µm are observed, but the average grain size is reduced from about 60 µm to 10 to 30 µm. Thus, this case is also suitable.

In Step S612, the rotor 30 is completed by using the stacked steel sheets for the rotor core 32. Thus, it is possible to obtain the rotor 30 including the rotor core 32 in which only the strength of the predetermined part including the bridge portions 41 and 42 is locally increased. In other words, the widths of the bridge portions 41 and 42 and the like can be minimized, and the magnetic characteristics of the rotor core 32 can be enhanced.

In Step S614, stacked steel sheets for the stator core 211 are formed by stacking a plurality of steel sheets for the stator core 211.

In Step S616, the stator 21 is completed by using the stacked steel sheets for the stator core 211. Therefore, in the case of the stator core 211, the stator 21 is formed without being subjected to the mechanical energy or the high-density energy related to Step S608 or the heating related to Step S610 unlike the case of the rotor core 32. However, post-processes such as strain removal annealing may be executed. Thus, the average grain size of the grains in the stator core 211 is substantially equal to the average grain size of the grains in the sheet 7 (see the images G700 and G706 in FIG. 7). Accordingly, the stator 21 including the stator core 211 with low iron loss can be manufactured (see the image G706 in FIG. 7).

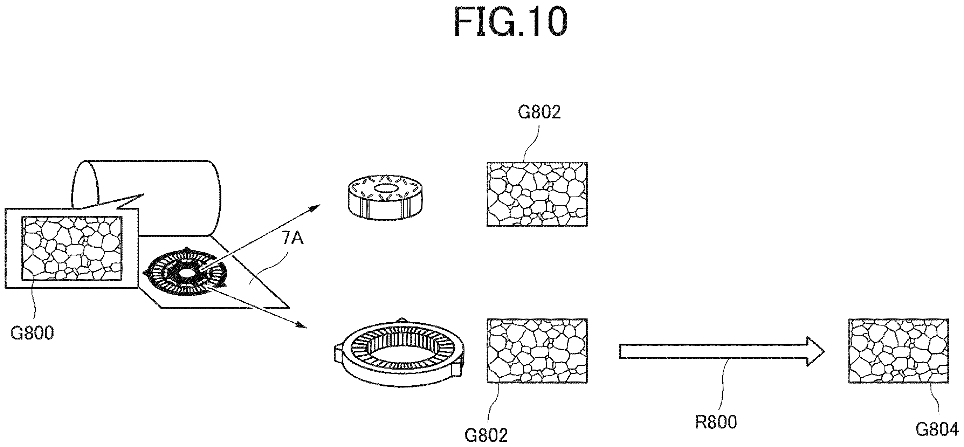

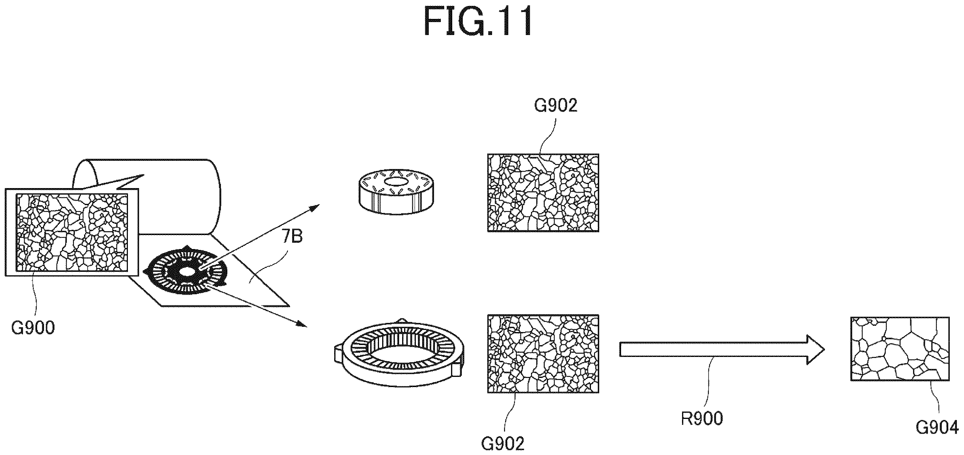

The effects of the present embodiment will be described in contrast with comparative examples shown in FIGS. 10 and 11.

FIG. 10 is an explanatory diagram of a manufacturing process according to Comparative Example 1, and is a diagram schematically showing each state in the manufacturing process. FIG. 11 is an explanatory diagram of a manufacturing process according to Comparative Example 2, and is a diagram schematically showing each state in the manufacturing process. FIGS. 10 and 11 are contrasted with FIG. 7 according to the present embodiment described above, and similarly illustrate images G800 etc. about grain sizes in association with the respective states.

In Comparative Example 1 shown in FIG. 10, the average grain size of grains in a sheet 7A is approximately medium, and is specifically smaller than the average grain size related to the image G700 in FIG. 7 but larger than the average grain size related to the image G704. In this case, a rotor core and a stator core made of steel sheets punched out of the sheet 7A have similar average grain sizes (see images G802 in FIG. 10). Then, the stator core is subjected to strain removal annealing (see an arrow R800), but the average grain size does not change significantly (see an image G804 in FIG. 10).

In Comparative Example 1 described above, the average grain size is not small in the rotor core. Therefore, the strength problem is likely to occur in bridge portions such as the bridge portions 41 to 44. Further, the degree of the low iron loss is insufficient because the average grain size is not large in the stator core.

In Comparative Example 2 shown in FIG. 11, the average grain size of grains in a sheet 7B is relatively small, and is specifically approximately equal to the average grain size related to the image G704 in FIG. 7. In this case, a rotor core and a stator core made of steel sheets punched out of the sheet 7B have similar average grain sizes (see images G902 in FIG. 11). Then, the stator core is subjected to annealing (see an arrow R900) to make the grains coarse, and the average grain size relatively increases (see an image G904 in FIG. 11).

In Comparative Example 2 described above, the average grain size is small in the rotor core. Therefore, the strength problem is unlikely to occur in bridge portions such as the bridge portions 41 to 44. Further, the degree of the low iron loss is sufficient because the average grain size is relatively large in the stator core.

In Comparative Example 2 described above, however, the average grain size of the grains in the sheet 7B is relatively small. Therefore, the sheet 7B before punching is hard (the strength of the sheet 7B itself is high), which leads to inconveniences such as an increase in the size of pressing equipment and a decrease in the life of a die.

In this regard, according to the present embodiment, the average grain size of the grains in the sheet 7 is relatively large as described above. Therefore, it is possible to prevent the inconveniences caused in Comparative Example 2 (the increase in the size of the pressing equipment and the decrease in the life of the die). Further, the strength problem is unlikely to occur in the bridge portions 41 and 42 and the like of the rotor core 32 because the average grain size in the bridge portions 41 and 42 and the like is small. Further, the degree of the low iron loss is sufficient because the average grain size is relatively large in the stator core 211.

Thus, according to the present embodiment, the strength of the rotor core 32 can appropriately be increased without increasing the size of the pressing equipment or shortening the life of the die. That is, according to the present embodiment, it is possible to achieve downsizing of the pressing equipment, an increase in the life of the die, and an increase in the strength of the rotor core 32 (and the rotor 30 accordingly). Further, the iron loss of the stator core 211 does not increase due to the increase in the strength of the rotor core 32.

Also in the present embodiment, the sheet 7A described in Comparative Example 1 may be used. Also in this case, the advantageous effects are still attained compared to Comparative Example 1 and Comparative Example 2.

While the embodiments have been described in detail above, the present invention is not limited to specific embodiments, and various modifications and changes can be made within the scope of the claims. It is also possible to combine all or some of the constituent elements according to the embodiments described above.

For example, in the embodiment described above, the mechanical energy or the high-density energy (thermal energy) is applied to some predetermined parts of the stacked steel sheets for the rotor core 32 to cause the plastic strain, but may be applied to the whole stacked steel sheets for the rotor core 32 to cause the plastic strain.

### Description of the Reference Numerals

1 ... motor (rotary electric machine), 7... sheet, 21 ... stator, 211 ... stator core, 30 ... rotor, 32 ... rotor core, 41 ... first bridge portion (bridge portion), 42 ... second bridge portion (bridge portion), 43 ... first center bridge portion (bridge portion), 44 ... second center bridge portion (bridge portion), 321 ... first magnet hole (magnet hole), 322 ... second magnet hole (magnet hole)

## Claims

1. A method for manufacturing a rotor for a rotary electric machine having a magnet hole, the method comprising:
a step of preparing a plurality of steel sheets punched out of a material by pressing;
a stacking step for stacking the plurality of steel sheets to form a rotor core;
a step of causing plastic strain before or after the stacking step by applying mechanical energy or high-density energy to at least one steel sheet out of the plurality of steel sheets; and
a step of applying heat to the steel sheet in which the plastic strain has been caused.

2. The manufacturing method according to claim 1, wherein the step of causing the plastic strain includes causing the plastic strain in a bridge portion of the steel sheet around the magnet hole in the rotor core.

3. The manufacturing method according to claim 1 or 2, wherein the step of applying the mechanical energy includes a step of performing at least one of shot blasting, shot peening, laser peening, and rolling.

4. The manufacturing method according to any one of claims 1 to 3, wherein
the step of causing the plastic strain is a step for increasing a density of grains in the steel sheet, and
the step of applying the heat is a step for making the grains finer by recrystallization.

5. A method for manufacturing a rotary electric machine, the method comprising:
a preparation step for preparing a plurality of first steel sheets and a plurality of second steel sheets punched out of the same material by pressing;
a rotor core manufacturing step for manufacturing a rotor core from the plurality of first steel sheets; and
a step of manufacturing a stator core having a magnet hole from the plurality of second steel sheets, wherein
the rotor core manufacturing step includes:
a step of causing plastic strain by applying mechanical energy or high-density energy to at least one first steel sheet out of the plurality of first steel sheets; and
a step of applying heat to the first steel sheet in which the plastic strain has been caused.

6. The manufacturing method according to claim 5, wherein the step of causing the plastic strain includes causing the plastic strain in a bridge portion of the first steel sheet around the magnet hole in the rotor core.

7. The manufacturing method according to claim 6, wherein a grain size of grains in the material is substantially equal to a grain size of grains in the stator core of the rotary electric machine.

8. The manufacturing method according to claim 7, wherein the preparation step includes punching the first steel sheets and the second steel sheets out of the same sheet serving as the material.

9. The manufacturing method according to claim 7, wherein the preparation step includes using a first sheet as the material and punching the first steel sheets out of the first sheet, and using a second sheet as the material and punching the second steel sheets out of the second sheet, the second sheet including grains having a grain size substantially equal to a grain size of grains in the first sheet.
